# EUROPEAN PATENT SPECIFICATION

(11) **EP 4 541 984 B1**
(45) Date of publication and mention of the grant of the patent: **07.10.2026**
(21) Application number: 23867971.6
(22) Date of filing: 28.08.2023
(51) Int. Cl.: E04G 7/20, F16B 7/04, F16B 7/20, F16B 2/08, F16B 2/22

(54) **COUPLING MECHANISM**
KOPPLUNGSMECHANISMUS
MÉCANISME D'ACCOUPLEMENT

(30) Priority: 22.09.2022 JP 2022151813
(43) Date of publication of application: 23.04.2025
(73) Proprietor: SoftBank Corp., Tokyo 105-7529 (JP)
(72) Inventor: YASUI, Gaku, Tokyo 105-7529 (JP); ISHIWAKA, Yuko, Tokyo 105-7529 (JP); TONE, Tadayuki, Tokyo 105-7529 (JP); YOSHIDA, Tomohiro, Tokyo 105-7529 (JP); ITO, Tadaaki, Tokyo 105-7529 (JP)
(74) Representative: SSM Sandmair
(86) International application number: PCT/JP2023/031047
(87) International publication number: WO 2024/062847

(56) References cited:
- DE-U1- 8 223 754
- JP-A- 2007 247 907
- JP-A- 2012 202 411
- JP-A- 2016 037 996
- JP-A- H06 200 592
- JP-A- H09 144 724
- KR-A- 20180 079 696
- US-A- 5 584 259
- US-A1- 2009 085 022

## Description

### Field

The present invention relates to a coupling mechanism.

### Background

A Technique of coupling a rod-shaped member, such as a pipe, and a rod-shaped member has been known. For example, is known a pipe coupled structure in which a first engagement portion extending in a circumferential direction and protruding to a pipe inner side is provided in an end portion of a first pipe, a second engagement portion extending in the circumferential direction and protruding to a pipe external side is provided in an end portion of a second pipe, the end portion of the second pipe is inserted into the end portion of the first pipe, and the first engagement portion and the second engagement portion are engaged with each other when the second engagement portion lays over the first engagement portion.

### Citation List

### Patent Literature

Patent Literature 1: Japanese Laid-open Patent Publication No. 2017-40391, Patent Literature 2: US 2009/085022 A1.

### Summary

### Technical Problem

According to the above-described conventional technique, however, because the two pipes to be coupled are limited to shapes having the first engagement portion and the second engagement portion, respectively, there is room for further improvement in improving versatility in coupling a rod-shaped member and a rod-shaped member.

The present application was made in view of the above-described circumstances and proposes a coupling mechanism enabling improvement in versatility in coupling a rod-shaped member and a rod-shaped member.

### Solution to Problem

The present invention is defined by the appended claims.

### Advantageous Effects of Invention

According to a mode of an embodiment, an effect that it is possible to improve versatility in coupling a rod-shaped member and a rod-shaped member is realized.

### Brief Description of Drawings

FIG. 1 is a perspective view illustrating two rod-shaped members before being coupled by a coupling mechanism according to an embodiment.
FIG. 2 is a perspective view illustrating the two rod-shaped members after being coupled by the coupling mechanism according to the embodiment.
FIG. 3 is a relevant-part perspective view illustrating one end of the rod-shaped member according to the embodiment.
FIG. 4 is a relevant-part perspective view illustrating the one end of the rod-shaped member according to the embodiment.
FIG. 5 is a relevant-part perspective view illustrating the other end of the rod-shaped member according to the embodiment.
FIG. 6 is a relevant-part perspective view illustrating the other end of the rod-shaped member according to the embodiment.
FIG. 7 is a relevant-part perspective view illustrating the other end of the rod-shaped member according to the embodiment.
FIG. 8 is a relevant-part perspective view illustrating the other end of the rod-shaped member according to the embodiment.
FIG. 9 is a relevant-part perspective view illustrating a coupling part of the two rod-shaped members that are coupled by the coupling mechanism according to the embodiment.
FIG. 10 is a relevant-part perspective view illustrating a coupling part of the two rod-shaped members that are coupled by the coupling mechanism according to the embodiment.

### Description of Embodiments

A mode for carrying out a coupling mechanism according to the present application (referred to as "embodiment" below) will be descried in detail below with reference to the drawings. Note that the embodiment does not limit the coupling mechanism according to the present application. The same parts are denoted with the same reference numerals in each embodiment below and redundant description will be omitted.

### Embodiment

A coupling mechanism (also referred to as a coupling device) according to the embodiment below, for example, is usable to build scaffolding that is used to set an imaging device under water. In the following embodiment, a hard polyvinyl chloride pipe (referred to as "PVC pipe" below) will be described as an example of a rod-shaped member with reference to the drawings. Note that the rod-shaped member is not limited to a PVC pipe and the rod-shaped member may be any member as long as the member is rod-shaped. For example, the rod-shaped member is not limited to a pipe, and the rod-shaped member may have any shape as long as the rod-shaped member is relatively long in proportion to its diameter. For example, the rod-shaped member need not be hollow, and the rod-shaped member may have a shape of an elongated cylinder (for example, a round bar) or a shape of an elongated prism (for example, a square bar). The material of the rod-shaped member is not limited to hard polyvinyl chloride. For example, the material of the rod-shaped member may be synthetic resin other than hard polyvinyl chloride, concreate, or a tree. The material of the rod-shaped member may be metal. For example, the material of the rod-shaped member may be steel, stainless, aluminum, or copper.

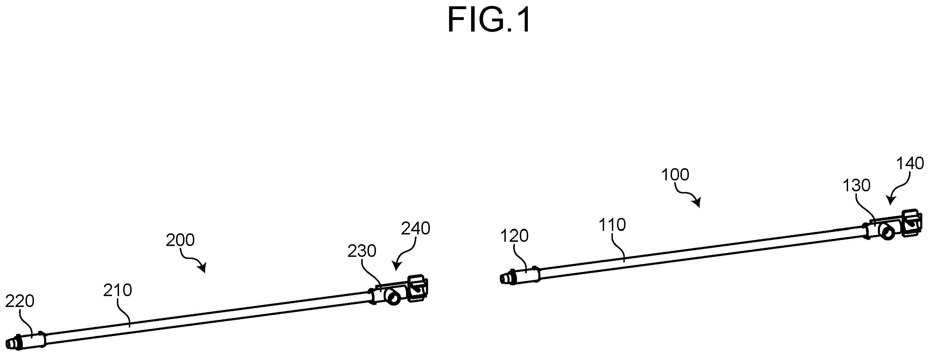

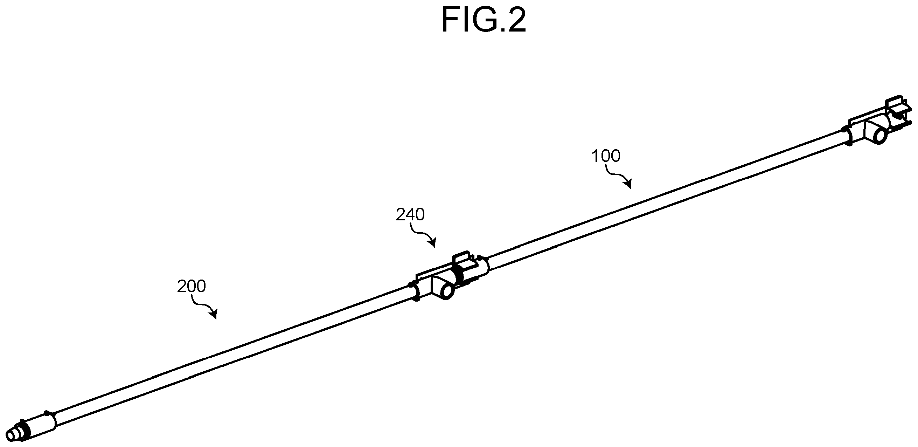

First of all, using FIG. 1 and FIG. 2, an overview of the coupling mechanism according to the embodiment will be described. FIG. 1 is a perspective view illustrating two rod-shaped members before being coupled by the coupling mechanism according to the embodiment. FIG. 1 illustrates a rod-shaped member 100 and a rod-shaped member 200 as the two rod-shaped members. The rod-shaped member 100 and the rod-shaped member 200 have the same configuration. An example where the coupling mechanism according to the embodiment is used in a coupling device including the rod-shaped member 100 and the rod-shaped member 200 will be presented below.

As illustrated in FIG. 1, the rod-shaped member 100 includes a rod portion 110 that is elongated and tubular. The rod-shaped member 100 includes a first coupling 120 at one end of the rod portion 110. The first coupling 120 is a tubular member that is used to couple the rod-shaped member and the rod-shaped member for extension. Formation is performed such that the inner diameter of the first coupling 120 coincides with an outer diameter of the rod portion 110 and the rod portion 110 is inserted into the rod portion 110 and accordingly the first coupling 120 is attached to the one end of the rod portion 110.

A through-hole is formed on an outer circumference of the rod-shaped member 100. Specifically, a hole penetrating the pipe of the first coupling and the pipe of the rod portion 110 is formed. More specifically, a through-hole is formed in an outer circumference of one of both ends of the rod portion 110, which is the end on a side where the first coupling 120 is provided. A through-hole is formed in a position of the first coupling 120 that is opposed to the through-hole that is formed in the rod portion 110 with the rod portion 110 being inserted into the first coupling 120. In other words, each of the through-holes is formed such that, with the rod portion 110 being inserted into the first coupling 120, the through-hole that is formed in the rod portion 110 and the through-hole that is formed in the first coupling 120 are in coinciding positions. Formation is performed such that the position of the center of the through-hole formed in the rod portion 110 coincides with the position of the center of the through-hole formed in the first coupling 120. Formation is performed such that the size of the through-hole formed in the rod portion 110 coincides with the size of the through-hole formed in the first coupling 120.

The rod-shaped member 100 includes a second coupling 130 at another end of the rod portion 110. The another end of the rod portion 110 refers to one of both ends of the rod portion 110, which is the end opposite to the end on the side where the first coupling 120 is provided. The second coupling 130 is a tubular member that couples the rod-shaped member and the rod-shaped member for extension. FIG. 1 illustrates the case where the second coupling 130 has a T-shape in which another pipe is formed on a center side surface of the pipe in a longitudinal direction. Formation is performed such that the inner diameter of the second coupling 130 coincides with the outer diameter of the rod portion 110 and the rod portion 110 is inserted into the pipe of the second coupling 130 in the longitudinal direction and accordingly the second coupling 130 is attached to the another end of the rod portion 110.

The rod-shaped member 100 includes a coupling member 140 at the another end of the rod portion 110. The another end of the rod portion 110 refers to one of both ends of the rod portion 110, which is the end opposite to the end on the side where the first coupling 120 is provided. In other words, the coupling member 140 is provided at one of both ends of the rod portion 110, which is the end on the same side as the side where the second coupling 130 is provided. One end of the coupling member 140 is fixed to the rod-shaped member 100 and a protrusion to be inserted into a hole of another rod-shaped member (not illustrated in the drawing) is formed on another end of the coupling member 140.

The rod-shaped member 200 includes a rod portion 210, a first coupling 220, a second coupling 230, and a coupling member 240. As described above, the rod-shaped member 100 and the rod-shaped member 200 have the same configuration, the rod portion 210 corresponds to the rod portion 110, the first coupling 220 corresponds to the first coupling 120, the second coupling 230 corresponds to the second coupling 130, and the coupling member 240 corresponds to the coupling member 140.

FIG. 2 is a perspective view illustrating the two rod-shaped members after being coupled by the coupling mechanism according to the embodiment. FIG. 2 illustrates that the end of the rod-shaped member 100 on the side where the first coupling 120 is provided is inserted into the end of the rod-shaped member 200 on the side where the second coupling 230 is provided and the rod-shaped member 100 and the rod-shaped member 200 are fixed with the coupling member 240. In other words, with an end portion of the rod-shaped member 100 being inserted into an end portion of the rod-shaped member 200, the protrusion that is formed on the coupling member 240 is inserted into the hole of the rod-shaped member 100.

As described using FIG. 1 and FIG. 2, the coupling mechanism according to the embodiment includes a first rod-shaped member (the rod-shaped member 200 in FIG. 1 and FIG. 2), a second rod-shaped member (the rod-shaped member 100 in FIG. 1 and FIG. 2) having an outer circumference in which a hole is formed, and a coupling member (the coupling member 240 in FIG. 1 and FIG. 2) having one end fixed to the first rod-shaped member and another end on which a protrusion that is inserted into the hole of the second rod-shaped member is formed. As described above, in the coupling mechanism according to the embodiment, simple processing of forming a hole on an outer circumference is performed on the one of the rod members and the coupling member is attached to the other rod-shaped member, which makes it possible to coupe one of the rod-shaped members and the other rod-shaped member. Thus, for example, without performing special processing of providing an engagement portion previously on the two pipes to be coupled on the coupling mechanism according to the embodiment, it is possible to couple one of the rod-shaped members and the other rod-shaped member. For example, to provide an engagement portion on the outer circumference of a pipe, it is necessary to form a metal plate (integral processing). In other words, the coupling mechanism according to the embodiment makes it possible to couple a rod-shaped member and a rod-shaped member in a general shape easily. Accordingly, the coupling mechanism makes it possible to improve versatility in coupling a rod-shaped member and a rod-shaped member.

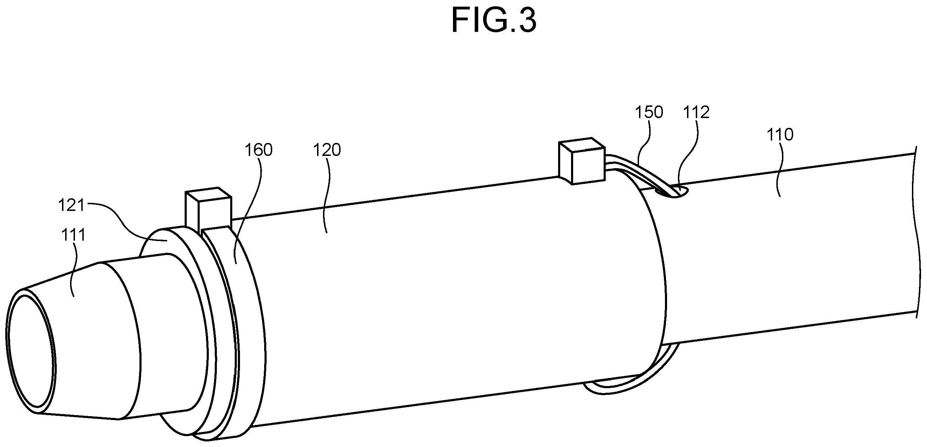

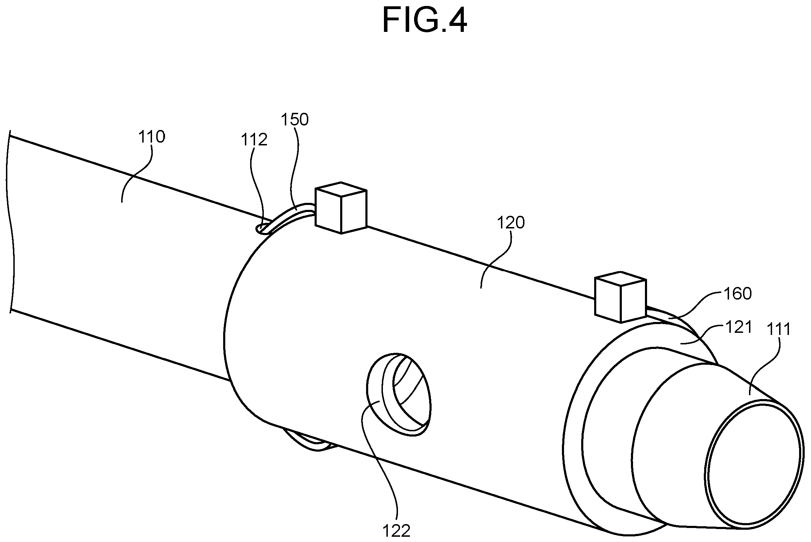

Using FIGS. 3 to 10, the coupling mechanism according to the embodiment will be described. FIG. 3 and FIG. 4 are relevant-part perspective views illustrating the one end of the rod-shaped member according to the embodiment. FIG. 3 is a relevant-part perspective view illustrating the end of the rod-shaped member 100 before being coupled by the coupling mechanism illustrated in FIG. 1 on the side where the first coupling 120 is provided.

As illustrated in FIG. 3, the rod-shaped member 100 includes a plug 111 that is continuous to the end of the rod portion 110 on the side where the first coupling 120 is provided. The plug 111 has a tubular shape whose diameter reduces toward an end portion of the rod portion 110 in a longitudinal direction of the rod portion 110. Formation is performed such that the center of the diameter of the plug 111 coincides with the center of the diameter of the rod portion 110. The plug 111 is inserted into the second coupling 230 of the rod-shaped member 200. As described above, in the coupling mechanism according to the embodiment, the plug 111 of the rod-shaped member 100 is inserted into the second coupling 230 of the rod-shaped member 200 and thereby the radial direction of the rod-shaped member 100 is fixed to the radial direction of the rod-shaped member 200.

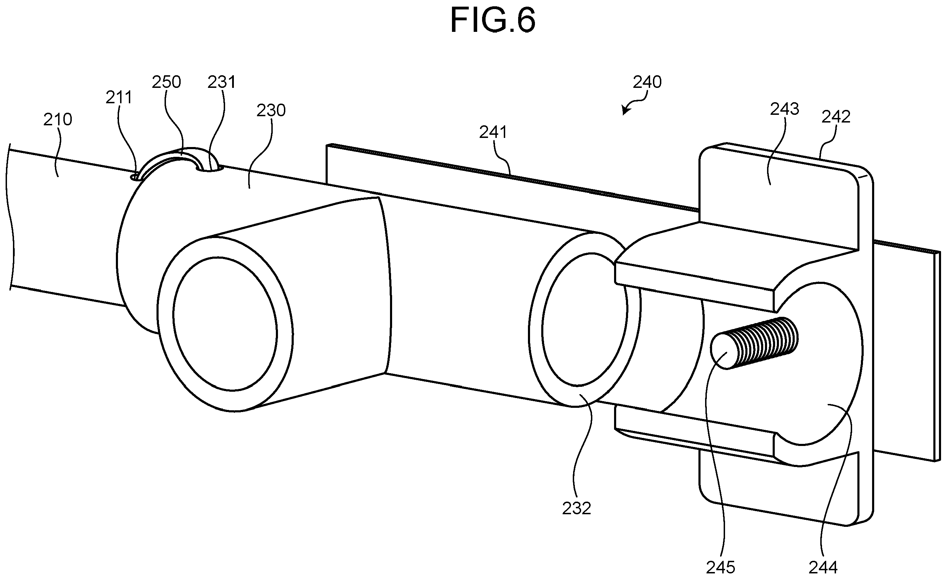

The first coupling 120 is provided in a position separated from the end of the rod portion 110 on the side where the first coupling 120 is provided in the longitudinal direction of the rod portion 110 by a first distance. In the rod portion 110, a portion corresponding to a length of the first distance in the longitudinal direction of the rod portion 110 from the end of the rod portion 110 on the side where the first coupling 120 is provided (also referred to as "portion of the rod portion 110 corresponding to the first distance" below) is inserted together with the plug 111 into the second coupling 230 of the rod-shaped member 200. Specifically, the portions of the plug 111 and the rod portion 110 corresponding to the first distance are inserted into the second coupling 230 of the rod-shaped member 200 such that a cross-section 121 of the pipe of the first coupling 120 and a cross-section 232 of the pipe of the second coupling 230 (refer to FIG. 6) make contact with each other. As described above, in the coupling mechanism according to the embodiment, the portions of the plug 111 and the rod portion 110 corresponding to the first distance are inserted into the second coupling 230 of the rod-shaped member 200 such that the cross-section 121 of the pipe of the first coupling 120 and the cross-section 232 of the pipe of the second coupling 230 (refer to FIG. 6) make contact with each other and thereby the radial direction of the rod-shaped member 100 is fixed to the radial direction of the rod-shaped member 200.

A hole 112 and a hole 113 (not illustrated in the drawing) in a pair are formed on the outer circumference of the rod-shaped member 100. Specifically, the hole 112 and the hole 113 are formed on the outer circumference of the rod portion 110. The hole 112 and the hole 113 are formed such that the holes penetrate the thickness of the pipe of the rod portion 110 in the radial direction. In other words, the hole 112 and the hole 113 are formed in symmetrical positions with respect to the center of a circular shape on a cross-sectional view of the rod portion 110. The hole 112 and the hole 113 are provided in positions separated from the end of the rod portion 110 on the side where the first coupling 120 is provided in the longitudinal direction of the rod portion 110 by a second distance. The second distance is a distance longer than the distance obtained by summing the first distance and the length of the first coupling 120.

A hole 123 (not illustrated in the drawing) and a hole 124 (not illustrated in the drawing) in a pair are formed on an outer circumference of the first coupling 120. Specifically, the hole 123 and the hole 124 are formed such that the holes penetrate the thickness of the pipe of the first coupling 120 in the radial direction. In other words, the hole 123 and the hole 124 are formed in symmetrical positions with respect to the center of a circular shape on a cross-sectional view of the first coupling 120. The hole 123 and the hole 124 are formed on the outer circumference of one of both ends of the first coupling 120, which is the end closer to the hole 112 and the hole 113 of the rod portion 110.

A hole 114 (not illustrated in the drawing) and a hole 115 (not illustrated in the drawing) in a pair are formed on an outer circumference of the rod portion 110 that is covered with the first coupling 120. Specifically, the hole 114 and the hole 115 are formed such that the holes penetrate the thickness of the pipe of the rod portion 110 in the radial direction. In other words, the hole 114 and the hole 115 are formed in symmetrical positions with respect to the center of a circular shape on a cross-sectional view of the rod portion 110. The hole 114 and the hole 115 are formed respectively in positions on the rod portion 110 that are opposed respectively to the hole 123 and the hole 124 that are formed in the first coupling 120 with the rod portion 110 being inserted into the first coupling 120. In other words, each of the holes is formed such that, with the rod portion 110 being inserted into the first coupling 120, the hole 123 and the hole 124 that are formed in the first coupling 120 and the hole 114 and the hole 115 that are formed in the rod portion 110 are in coinciding positions, respectively. Formation is performed such that the positions of the centers of the hole 114 and the hole 115 coincide respectively with the positions of the centers of the hole 123 and the hole 124 of the first coupling 120 that covers the outer circumference of the rod portion 110. Formation is performed such that the size of the hole 114 and the hole 115 coincides with the size of the hole 123 and the hole 124.

A cable tie 150 is tied in a state of being inserted such that the cable tie 150 passes through all of the hole 112, the hole 113, the hole 123, the hole 114, the hole 115, and the hole 124. Accordingly, one of the both ends of the first coupling 120, which is the end closer to the hole 112 and the hole 113 of the rod portion 110, is fixed to the rod portion 110.

A hole 125 (not illustrated in the drawing) and a hole 126 (not illustrated in the drawing) in a pair are formed on the outer circumference of the first coupling 120. Specifically, the hole 125 and the hole 126 are formed such that the holes penetrate the thickness of the pipe of the first coupling 120 in the radial direction. In other words, the hole 125 and the hole 126 are formed in symmetrical positions with respect to the center of a circular shape on a cross-sectional view of the first coupling 120. The hole 125 and the hole 126 are formed on the outer circumference of one of both ends of the first coupling 120, which is the end farther from the hole 112 and the hole 113 of the rod portion 110. In other words, the hole 125 and the hole 126 are formed on the outer circumference of one of both the ends of the first coupling 120, which is the end on the side opposite to the side where the hole 123 and the hole 124 are formed.

A hole 116 (not illustrated in the drawing) and a hole 117 (not illustrated in the drawing) in a pair are formed on an outer circumference of the rod portion 110 that is covered with the first coupling 120. Specifically, the hole 116 and the hole 117 are formed such that the holes penetrate the thickness of the pipe of the rod portion 110 in the radial direction. In other words, the hole 116 and the hole 117 are formed in symmetrical positions with respect to the center of a circular shape on a cross-sectional view of the rod portion 110. The hole 116 and the hole 117 are formed in positions on the rod portion 110 that are opposed respectively to the hole 125 and the hole 126 that are formed in the first coupling 120 with the rod portion 110 being inserted into the first coupling 120. In other words, each of the holes is formed such that, with the rod portion 110 being inserted into the first coupling 120, the hole 125 and the hole 126 that are formed in the first coupling 120 and the hole 116 and the hole 117 that are formed in the rod portion 110 are in coinciding positions, respectively. Formation is performed such that the positions of the centers of the hole 116 and the hole 117 coincide respectively with the positions of the centers of the hole 125 and the hole 126 of the first coupling 120 that covers the outer circumference of the rod portion 110. Formation is performed such that the size of the hole 116 and the hole 117 coincides with the size of the hole 125 and the hole 126.

A cable tie 160 is tied in a state of being inserted such that the cable tie 160 passes through all of the hole 125, the hole 117, the hole 116, and the hole 126. Accordingly, one of the both ends of the first coupling 120, which is the end father from the hole 112 and the hole 113 of the rod portion 110, is fixed to the rod portion 110.

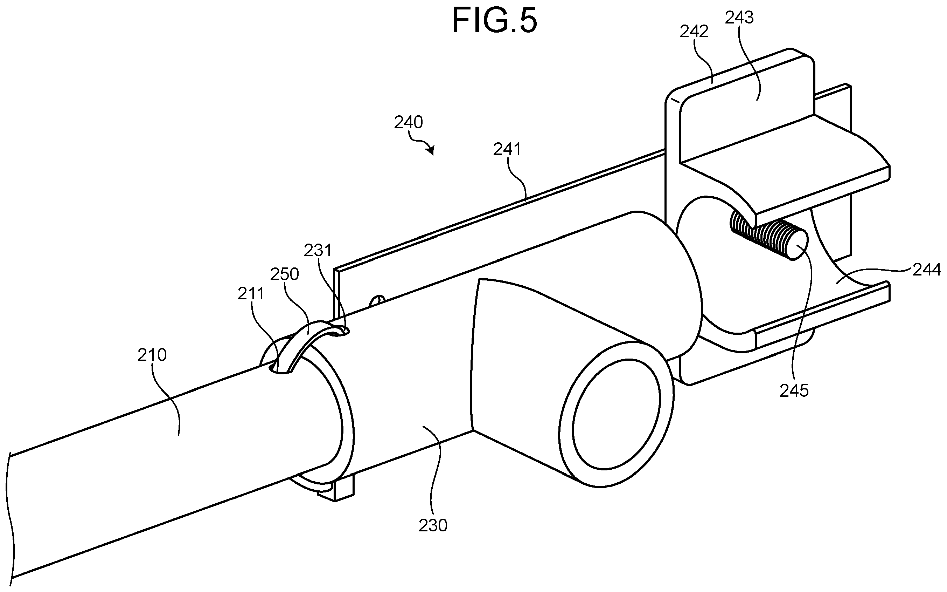

FIG. 4 is a relevant-part perspective view of the end of the rod portion 110 on the side where the first coupling 120 of the rod-shaped member 100 illustrated in FIG. 3 is provided viewed from the back side in FIG. 3. As illustrated in FIG. 4, a hole 122 is formed on the outer circumference of the first coupling 120. The hole 122 is formed such that the hole penetrates the thickness of the pipe of the first coupling 120 in the radial direction. The hole 112 is formed such that the hole does not penetrate the thickness of the pipe of the first coupling 120 on the opposite side in the radial direction. The hole 122 is formed in a center portion of the first coupling 120 in the circumference of the first coupling 120 (that is, a position at which the length of the first coupling 120 is halved approximately). The hole 122 is formed in the radial direction of the first coupling 120 that is orthogonal to a straight line passing through the centers of the hole 123 and the hole 124 in the outer circumference of the first coupling 120. A protrusion 245 (refer to FIG. 5 and FIG. 6) that is formed in the coupling member 240 is inserted into the hole 122. Formation is performed such that the diameter of the hole 122 is approximately equal to the diameter of the protrusion 245 such that the protrusion 245 is insertable.

A hole 118 (not illustrated in the drawing) is formed on the outer circumference of the rod portion 110 that is covered with the first coupling 120. Specifically, formation is performed such that the position of the center of the hole 116 coincides with the position of the center of the hole 122 of the first coupling 120 that covers the outer circumference of the rod portion 110. Formation is performed such that the size of the hole 118 coincides with the size of the hole 122. The hole 118 is formed such that the hole penetrates the thickness of the pipe of the rod portion 110 in the radial direction. The hole 118 is formed such that the hole does not penetrate the thickness of the pipe on the opposite side in the radial direction. The hole 118 is formed in a center portion of the rod portion 110 that is covered with the first coupling 120 in the circumference of the rod portion 110 (that is, a position at which the length of the first coupling 120 is halved approximately). The hole 118 is formed in the radial direction of the rod portion 110 that is orthogonal to a straight line passing through the centers of the hole 114 and the hole 115 in the outer circumference of the rod portion 110. The protrusion 245 (refer to FIG. 5 and FIG. 6) that is formed in the coupling member 240 is inserted into the hole 118. Formation is performed such that the diameter of the hole 118 is approximately equal to the diameter of the protrusion 245 such that the protrusion 245 is insertable.

FIGS. 5 to 8 are relevant-part perspective views illustrating the another end of the rod-shaped member according to the embodiment. FIG. 5 is a relevant-part perspective view illustrating the end of the rod-shaped member 200 before being coupled by the coupling mechanism illustrated in FIG. 1 on the side where the second coupling 230 and the coupling member 240 are provided.

As illustrated in FIG. **5****,** the second coupling 230 is provided in a position where the rod portion 210 is inserted into the pipe of the second coupling 230 in the longitudinal direction by a third distance in the longitudinal direction of the rod portion 210 from the end of the rod portion 210 on the side where the second coupling 230 is provided.

A hole 211 and a hole 212 (not illustrated in the drawing) in a pair are formed on an outer circumference of the rod portion 110 that is covered with the first coupling 120. Specifically, the hole 211 and the hole 212 are formed such that the holes penetrate the thickness of the pipe of the rod portion 210 in the radial direction. In other words, the hole 211 and the hole 212 are formed in symmetrical positions with respect to the center of a circular shape on a cross-sectional view of the rod portion 210. The hole 211 and the hole 212 are provided in positions separated by a fourth distance in the longitudinal direction of the rod portion 210 from the end of the rod portion 210 on the side where the second coupling 230 is provided. The fourth distance here is a distance longer than the third distance.

A hole 231 and a hole 233 (not illustrated in the drawing) in a pair are formed in an outer circumference of the second coupling 230. Specifically, the hole 231 and the hole 233 are formed such that the holes penetrate the thickness of the pipe of the second coupling 230 in the radial direction. In other words, the hole 231 and the hole 233 are formed in symmetrical positions with respect to the center of a circular shape on a cross-sectional view of the second coupling 230. The hole 231 and the hole 233 are formed on the outer circumference of one of both ends of the second coupling 230, which is the end closer to the hole 211 and the hole 212 of the rod portion 210.

A hole 213 (not illustrated in the drawing) and a hole 214 (not illustrated in the drawing) in a pair are formed on the outer circumference of the rod portion 210 that is covered with the second coupling 230.
Specifically, the hole 213 and the hole 214 are formed such that the holes penetrate the thickness of the pipe of the rod portion 210 in the radial direction. In other words, the hole 213 and the hole 214 are formed in symmetrical positions with respect to the center of a circular shape on a cross-sectional view of the rod portion 210. The hole 213 and the hole 214 are formed respectively in positions on the rod portion 210 that are opposed respectively to the hole 231 and the hole 233 that are formed in the second coupling 230 with the rod portion 210 being inserted into the pipe of the second coupling 230 in the longitudinal direction. In other words, each of the holes is formed such that, with the rod portion 210 being inserted into the pipe of the second coupling 230 in the longitudinal direction, the hole 231 and the hole 233 that are formed in the second coupling 230 and the hole 213 and the hole 214 that are formed in the rod portion 210 are in coinciding positions, respectively. Formation is performed such that the positions of the centers of the hole 213 and the hole 214 coincide respectively with the positions of the centers of the hole 231 and the hole 233 of the second coupling 230 that covers the outer circumference of the rod portion 210. Formation is performed such that the size of the hole 213 and the hole 214 coincides with the size of the hole 231 and the hole 233.

A cable tie 250 is tied in a state of being inserted such that the cable tie 250 passes through all of the hole 211, the hole 212, the hole 233, the hole 214, the hole 213, and the hole 231. Accordingly, one of both ends of the second coupling 230, which is the end closer to the hole 211 and the hole 212 of the rod portion 210, is fixed to the rod portion 210.

The coupling member 240 has a platy member 241 that is thin and platy. Specifically, one end of the platy member 241 in the longitudinal direction is fixed to the outer circumference of the second coupling 230. A supporter 242 is fixed to another end of the platy member 241 in the longitudinal direction. The platy member 241 is deformable. In other words, the platy member 241 is in a state of being fixed on the side of the one end and is deformable on the side of the another end.

The platy member 241 is fixed in a position in a radial direction of the second coupling 230 orthogonal to a straight line passing through the centers of the hole 231 and the hole 233 in the outer circumference of the second coupling 230. The platy member 241 is fixed such that the radial direction of the second coupling 230 orthogonal to the straight line passing through the centers of the hole 231 and the hole 233 and a normal direction of the platy member 241 coincide. For example, the platy member 241 is a plate of polypropylene. Note that the platy member 241 is not limited to polypropylene, and the platy member 241 may be of any material as long as the material is excellent in mechanical strength, such as tensile strength, impact strength, and compressive strength. For example, the platy member 241 may be of synthetic resin other than polypropylene.

The coupling member 240 further includes the supporter 242 that is formed into a shape along the outer circumference of the first coupling 120 of the rod-shaped member 100 and is pressed into the first coupling 120 of the rod-shaped member 100, thereby supporting the rod-shaped member 100. The supporter 242 includes a grip portion 244 that is formed into a shape along the outer circumference of the first coupling 120 of the rod-shaped member 100 and a press portion 243 that is continuous to the grip portion 244 and that is platy. Specifically, one of both ends of the platy member 241 in the longitudinal direction, which is the end opposite to the end fixed to the outer circumference of the second coupling 230, is fixed to the supporter 242. More specifically, the surface of the end opposite to one of both ends of the platy member 241 in the longitudinal direction, which is the end fixed to the outer circumference of the second coupling 230, and the surface of the press portion 243 are fixed to each other. The supporter 242 is fixed to the platy member 241 such that the center axis of the grip portion 244 and the center axis of the rod-shaped member 200 in the longitudinal direction coincide.

In the coupling member 240, the protrusion 245 to be inserted into the hole 122 and the hole 118 of the rod-shaped member 100 is formed. Specifically, the protrusion 245 is formed at a center portion of the grip portion 244 such that the protrusion 245 protrudes in the radial direction of the grip portion 244. More specifically, the protrusion 245 is a screw portion of a bolt that is inserted from the side of the platy member 241 such that the protrusion 245 penetrates a hole 2411 (not illustrated in the drawing) that is formed in the platy member 241 and a hole 247 (not illustrated in the drawing) that is formed in the supporter 242.

FIG. 6 is a relevant-part perspective view of the end of the rod-shaped member 200 illustrated in FIG. 5 on the side where the second coupling 230 and the coupling member 240 are provided, which is the end viewed from the side of the supporter 242. As illustrated in FIG. 6, the supporter 242 is provided in a position separated by a fifth distance in the longitudinal direction of the rod portion 210 from the end of the rod portion 210 on the side where the second coupling 230 is provided.

In the coupling member 240, with the cross-section 121 of the pipe of the first coupling 120 illustrated in FIG. 3 and FIG. 4 and the cross-section 232 of the pipe of the second coupling 230 illustrated in FIG. 6 making contact with each other, the protrusion 245 is inserted into the hole 122 and the hole 118 illustrated in FIG. 4.

As described using FIGS. 3 to 6, in a coupling member according to the embodiment (the coupling member 240 in FIG. 5 and FIG. 6), with an end portion of the first rod-shaped member (the cross-section 232 in FIG. 6) and an end portion of the second rod-shaped member (the cross-section 121 in FIG. 3 and FIG. 4) making contact with each other, a protrusion (the protrusion 245 in FIG. 5 and FIG. 6) is inserted into a hole (the hole 122 in FIG. 4) of the second rod-shaped member. As described above, in the coupling mechanism according to the embodiment, with the two rod-shaped members to be coupled making contact with each other, the protrusion that is fixed to one of the rod-shaped members is inserted to the hole of the other rod-shaped member, which makes it possible to fix the radial direction of the other rod-shaped member to the direction of the one rod-shaped member. In other words, the coupling mechanism according to the embodiment makes it possible to fix the radial directions of the two rod-shaped members to be coupled to each other.

In the coupling member according to the embodiment (the coupling member 240 in FIG. 5 and FIG. 6), with an end portion (the portion of the plug 111 and the rod portion 110 corresponding to the first distance in FIGS. 3 to 6) of any one of the first rod-shaped member (the rod-shaped member 200 in FIG. 5 and FIG. 6) and the second rod-shaped member (the rod-shaped member 100 in FIG. 3 and FIG. 4) being inserted into an end portion (the second coupling 230 in FIGS. 3 to 6) of the other rod-shaped member, the protrusion (the protrusion 245 in FIG. 5 and FIG. 6) is inserted into the hole (the hole 122 in FIG. 4) of the second rod-shaped member. As described above, in the coupling mechanism according to the embodiment, with the end portion of one of the two rod-shaped members to be coupled being inserted into the end portion of the other rod-shaped member, the protrusion fixed to the one of the rod-shaped members is inserted into the hole of the other rod-shaped member and thus it is possible to fix the radial direction of the other rod-shaped member to the radial direction of the one of the rod-shaped members. In other words, the coupling mechanism according to the embodiment enables fixation of the radial directions of the two rod-shaped members to be coupled to each other.

The coupling member (the coupling member 240 in FIG. 5 and FIG. 6) according to the embodiment further includes a supporter (the supporter 242 in FIG. 5 and FIG. 6) that is formed into a shape along the outer circumference of the second rod-shaped member (the rod-shaped member 100 in FIG. 3 and FIG. 4) and that is pressed into the second rod-shaped member, thereby supporting the second rod-shaped member. As described above, in the coupling mechanism according to the embodiment, the supporter is pressed into the second rod-shaped member and thus it is possible to fix the longitudinal direction of the first rod-shaped member to the longitudinal direction of the second rod-shaped member. In other words, the coupling mechanism according to the embodiment makes it possible to fix the longitudinal directions of the two rod-shaped members to be coupled to each other. In other words, the coupling mechanism according to the embodiment enables fixation to the state where the axes of the two rods-shaped members to be coupled coincide.

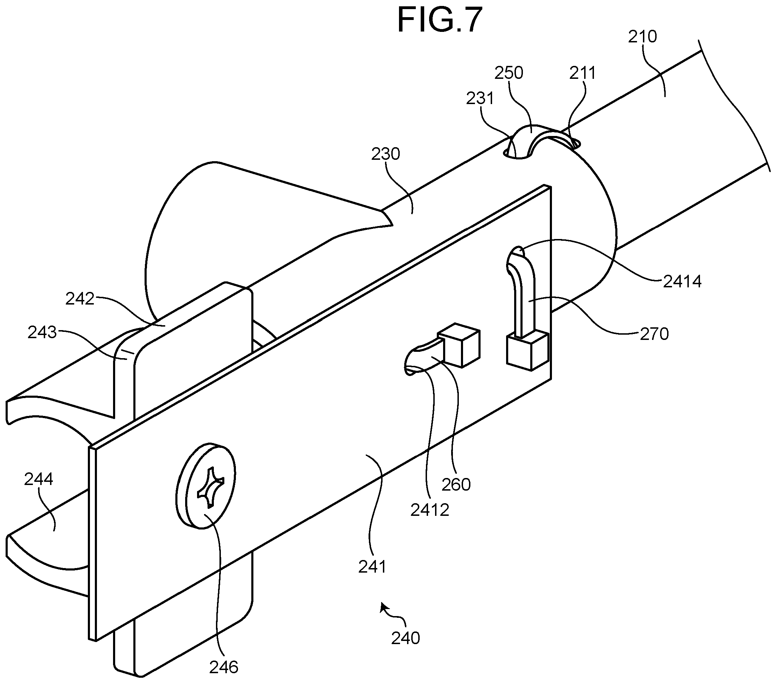

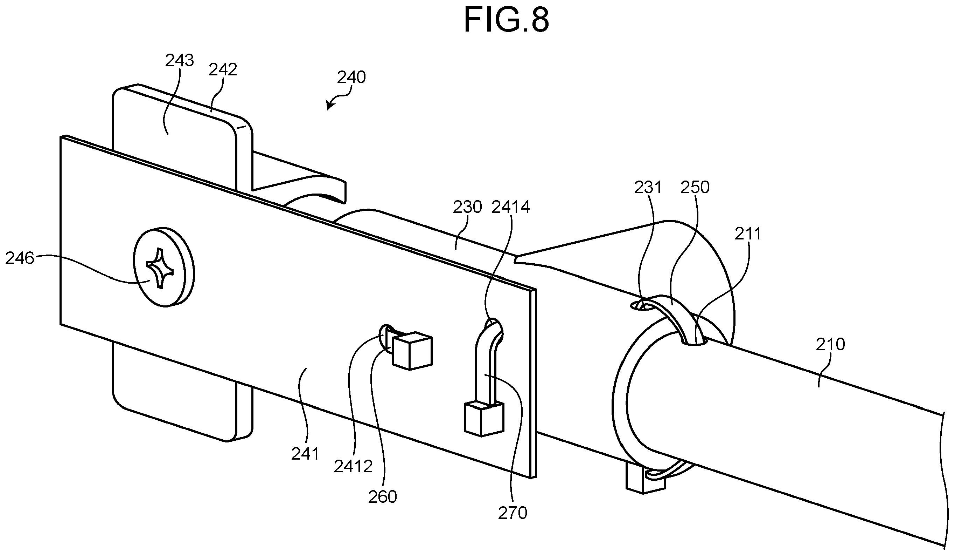

FIG. 7 is a relevant-part perspective view of the end of the rod-shaped member 200 illustrated in FIG. 6 on the side where the second coupling 230 and the coupling member 240 are provided, viewed from the back side in FIG. 6. FIG. 8 is a relevant-part perspective view of the back side of the end of the rod-shaped member 200 illustrated in FIG. 7 on the side where the second coupling 230 and the coupling member 240 are provided, viewed at a further different angle.

As illustrated in FIG. 7 and FIG. 8, the hole 2411 (not illustrated in the drawing) is formed at one of both ends of the platy member 241 in the longitudinal direction, which is the end opposite to the end fixed to the outer circumference of the second coupling 230. The hole 2411 is formed such that the hole 2411 penetrates the thickness of the platy member 241. In the supporter 242, the hole 247 (not illustrated in the drawing) penetrating the thickness of the press portion 243 and the thickness of the grip portion 244 is formed. The hole 247 is formed in a position of the center of the surface of the press portion 243. FIG. 7 and FIG. 8 illustrates a head 246 of the bolt that is inserted from the side of the platy member 241 such that the bolt penetrates the hole 2411 (not illustrated in the drawing) formed in the platy member 241 and the hole 247 (not illustrated in the drawing) formed in the supporter 242. Accordingly, one of both ends of the platy member 241, which is the end opposite to the end fixed to the outer circumference of the second coupling 230 is fixed to the supporter 242.

Two holes 2412 and 2413 (not illustrated in the drawing) that are aligned in the longitudinal direction of the platy member 241 are formed at one of both ends of the platy member 241 in the longitudinal direction, which is the end fixed to the outer circumference of the second coupling 230. The hole 2412 is formed in a position separated from the hole 2411 by a sixth distance in the longitudinal direction of the platy member 241. The hole 2413 is formed in a position separated from the hole 2412 by a seventh distance in the longitudinal direction of the platy member 241. The hole 2412 and the hole 2413 are formed such that the holes penetrate the thickness of the platy member 241. A hole 235 (not illustrated in the drawing) and a hole 236 (not illustrated in the drawing) are formed in positions corresponding to the hole 2412 and the hole 2413, respectively, on the outer circumference of the second coupling 230. A cable tie 260 is tied in a state of being inserted such that the cable tie 260 passes through all of the hole 2412, the hole 235, the hole 236, and the hole 2413. Accordingly, one of both ends of the platy member 241, which is the end opposite to the end fixed to the supporter 242, is fixed to the outer circumference of the second coupling 230.

Two holes 2414 (not illustrated in the drawing) and 2415 (not illustrated in the drawing) that are aligned in the transverse direction of the platy member 241 are formed at one of both ends of the platy member 241 in the longitudinal direction, which is the end fixed to the outer circumference of the second coupling 230. The hole 2414 is formed in a position separated from the hole 2413 by a eighth distance in the longitudinal direction of the platy member 241. The hole 2414 and the hole 2415 are formed such that the holes penetrate the thickness of the platy member 241. A hole 238 (not illustrated in the drawing) and a hole 237 (not illustrated in the drawing) are formed in positions corresponding to the hole 2414 and the hole 2415, respectively, on the outer circumference of the second coupling 230. A cable tie 270 is tied in a state of being inserted such that the cable tie 270 passes through all of the hole 2414, the hole 238, the hole 237, and the hole 2415. Accordingly, one of both ends of the platy member 241, which is the end opposite to the end fixed to the supporter 242, is fixed to the outer circumference of the second coupling 230.

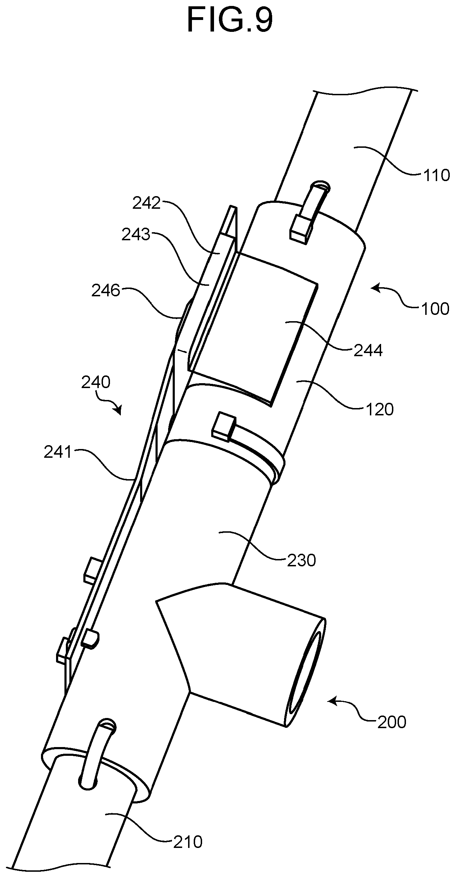

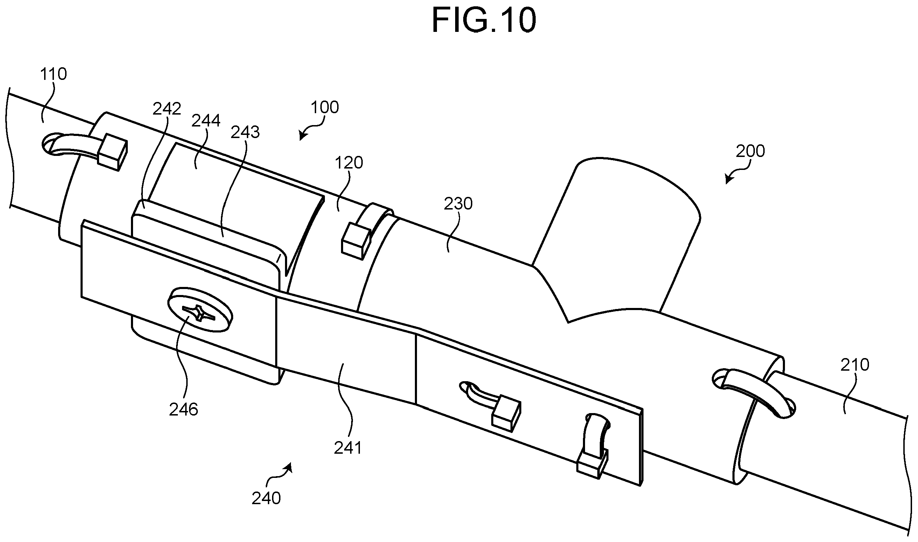

Using FIGS. 9 and 10, a configuration of a coupling part of the two rod-shaped members that are coupled by the coupling mechanism according to the embodiment will be described next. FIGS. 9 and 10 are relevant-part perspective views illustrating the coupling part of the two rod-shaped members that are coupled by the coupling mechanism according to the embodiment. FIGS. 9 and 10 are relevant-part perspective views illustrating the coupling part of the two rod-shaped members after being coupled by the coupling mechanism according to the embodiment illustrated in FIG. 2.

FIG. 9 and FIG. 10 illustrate that, with an end portion (the cross-section 232 illustrated in FIG. 6) of the rod-shaped member 200 and an end portion (the cross-section 121 illustrated in FIG. 3 and FIG. 4) of the rod-shaped member 100 making contact with each other, the coupling member 240 couples the rod-shaped member 100 and the rod-shaped member 200. It is also illustrated that, with an end portion (a portion of the plug 111 and the rod portion 110 corresponding to the first distance illustrated in FIG. 3 and FIG. 4) of the rod-shaped member 100 being inserted into an end portion (the second coupling 230 illustrated in FIG. 5 and FIG. 6) of the rod-shaped member 200 and with the protrusion (the protrusion 245 illustrated in FIG. 5 and FIG. 6) of the rod-shaped member 200 being inserted into the hole (the hole 122 in FIG. 4) of the rod-shaped member 100, the rod-shaped member 100 and the rod-shaped member 200 are coupled by the coupling member 240.

In FIG. 9 and FIG. 10, the grip portion 244 grips the pipe of the first coupling 120 and the protrusion (the protrusion 245 illustrated in FIG. 5 and FIG. 6) of the rod-shaped member 200 is inserted into the hole (the hole 122 in FIG. 4) of the rod-shaped member 100. As described above, the supporter 242 grips the rod-shaped member 100 and the protrusion of the rod-shaped member 200 is inserted into the hole of the rod-shaped member 100. Accordingly, the coupling mechanism according to the embodiment makes it possible to fix the longitudinal direction of the rod-shaped member 100 to the longitudinal direction of the rod-shaped member 200. In other words, the coupling mechanism according to the embodiment makes it possible to fix the longitudinal directions of the two rod-shaped members to be coupled to each other. In other words, the coupling mechanism according to the embodiment enables fixation to the state where the axes of the two rods-shaped members to be coupled coincide.

Some embodiments of the present application have been described in detail based on the drawings; however, they are exemplary and, starting with the mode described in the section of disclosure of the invention, it is possible to carry out the present invention in another mode on which various modifications and improvements are made based on the knowledge of those skilled in the art.

### Reference Signs List

- 100: ROD-SHAPED MEMBER
- 110: ROD PORTION
- 120: FIRST COUPLING
- 130: SECOND COUPLING
- 140: COUPLING MEMBER
- 200: ROD-SHAPED MEMBER
- 210: ROD PORTION
- 220: FIRST COUPLING
- 230: FIRST COUPLING
- 240: COUPLING MEMBER

## Claims

1. A coupling mechanism comprising:
a first rod-shaped member (200);
a second rod-shaped member (100); and
a coupling member (240), wherein
the first rod-shaped member (200) includes:
a first rod portion (210); and
a tubular first coupling (230) that is attached to one end of the first rod portion (210), and
the second rod-shaped member (100) includes:
a second rod portion (110); and
a tubular second coupling (120) that is attached to one end of the second rod portion (110),
the second rod-shaped member (100) having an outer circumference in which a hole (118,122) is formed,
the coupling member (240) includes:
a deformable platy member (241) one end of which is fixed to an outer circumference of the first coupling (230), and another end of which is fixed to a supporter (242);
a grip portion (244) provided to the supporter (242), the grip portion (244) having a shape along an outer circumference of the second coupling (120) and supporting the second coupling (120); and
a protrusion (245) that is a screw portion of a bolt, the protrusion (245) penetrating a hole (2411) that is formed in the platy member (241) and a hole (247) that is formed in the supporter (242) to protrude in a radial direction of the grip portion (244), and
the protrusion (245) of the coupling member (240) is inserted into a hole (122) of the second coupling (120) in a state where a cross-section (232) of a pipe of the first coupling (230) and a cross-section (121) of a pipe of the second coupling (120) are in contact with each other, and one end of the second rod-shaped member (100) is inserted into the tubular first coupling (230).

2. The coupling mechanism according to claim 1, wherein,
the first rod portion (210) is elongated and tubular,
the first coupling (230) is a tubular member, the first coupling (230) is provided in a position where the first rod portion (210) is inserted into the pipe of the first coupling (230) in the longitudinal direction by a first distance in the longitudinal direction of the first rod portion (210) from the end of the first rod portion (210) on the side where the first coupling (230) is provided, and
the second rod portion (110) is elongated and tubular,
the second coupling (120) is a tubular member, wherein the hole (122) is formed on an outer circumference of the second coupling (120), the second coupling (120) being provided in a position separated from the end of the second rod portion (110) on the side where the second coupling (120) is provided in the longitudinal direction of the second rod portion (110) by a second distance.

3. The coupling mechanism according to claim 2, wherein, in the coupling member (240), with a cross-section (121) of a pipe of the second coupling (120) and a cross-section (232) of a pipe of the first coupling (230) making contact with each other, the protrusion (245) is inserted into the hole (118,122) of the second rod-shaped member (100).

4. The coupling mechanism according to claim 1, wherein the coupling member (240) further includes a supporter (242) that is formed into a shape along the outer circumference of the second rod-shaped member (100) and that is pressed into the second rod-shaped member (100) and thus supports the second rod-shaped member (100).

5. The coupling mechanism according to claim 1, wherein the first rod-shaped member (200) and the second rod-shaped member (100) are pipes.

6. The coupling mechanism according to claim 5, wherein the first rod-shaped member (200) and the second rod-shaped member (100) are polyvinyl chloride pipes.

## Patentansprüche

1. Ein Kopplungsmechanismus, umfassend:
ein erstes stabförmiges Element (200);
ein zweites stabförmiges Element (100); und
ein Kopplungselement (240), wobei
das erste stabförmige Element (200) Folgendes umfasst:
einen ersten Stababschnitt (210); und
eine rohrförmige erste Kopplung (230), die an einem Ende des ersten Stababschnitts (210) befestigt ist, und
das zweite stabförmige Element (100) Folgendes umfasst:
einen zweiten Stababschnitt (110); und
eine rohrförmige zweite Kopplung (120), die an einem Ende des zweiten Stababschnitts (110) befestigt ist,
wobei das zweite stabförmige Element (100) einen Außenumfang aufweist, in dem eine Bohrung (122) ausgebildet ist,
wobei das Kopplungselement (240) Folgendes umfasst:
ein verformbares plattenförmiges Element (241), dessen eines Ende an einem Außenumfang der ersten Kopplung (230) befestigt ist und dessen anderes Ende an einem Träger (242) befestigt ist;
einen an dem Träger (242) vorgesehenen Griffabschnitt (244), wobei der Griffabschnitt (244) eine Form entsprechend einem Außenumfang der zweiten Kopplung (120) aufweist und die zweite Kopplung (120) abstützt; und
einen Vorsprung (245), der einen Schraubenabschnitt eines Bolzens bildet, wobei der Vorsprung (245) eine in dem plattenförmigen Element (241) ausgebildete Bohrung (2411) sowie eine in dem Träger (242) ausgebildete Bohrung (247) durchdringt, um in einer Radialrichtung des Griffabschnitts (244) vorzustehen, und
wobei der Vorsprung (245) des Kopplungselements (240) in eine Bohrung (122) der zweiten Kopplung (120) eingeführt ist, während ein Rohrquerschnitt (232) der ersten Kopplung (230) und ein Rohrquerschnitt (121) der zweiten Kopplung (120) miteinander in Kontakt stehen und ein Ende des zweiten stabförmigen Elements (100) in die rohrförmige erste Kopplung (230) eingeführt ist.

2. Der Kopplungsmechanismus nach Anspruch 1, wobei
der erste Stababschnitt (210) langgestreckt und rohrförmig ist,
die erste Kopplung (230) ein rohrförmiges Element ist, die erste Kopplung (230) an einer Position vorgesehen ist, an der der erste Stababschnitt (210) in das Rohr der ersten Kopplung (230) in der Längsrichtung um einen ersten Abstand in der Längsrichtung des ersten Stababschnitts (210) von dem Ende des ersten Stababschnitts (210) auf der Seite, auf der die erste Kopplung (230) vorgesehen ist, eingeführt ist, und
der zweite Stababschnitt (110) langgestreckt und rohrförmig ist,
die zweite Kopplung (120) ein rohrförmiges Element ist, wobei die Bohrung (122) an einem Außenumfang der zweiten Kopplung (120) ausgebildet ist, wobei die zweite Kopplung (120) an einer Position vorgesehen ist, die in der Längsrichtung des zweiten Stababschnitts (110) um einen zweiten Abstand von dem Ende des zweiten Stababschnitts (110) auf der Seite, auf der die zweite Kopplung (120) vorgesehen ist, beabstandet ist.

3. Der Kopplungsmechanismus nach Anspruch 2,
wobei bei dem Kopplungselement (240) der Vorsprung (245) in die Bohrung (118, 122) des zweiten stabförmigen Elements (100) eingeführt ist, während ein Rohrquerschnitt (121) der zweiten Kopplung (120) und ein Rohrquerschnitt (232) der ersten Kopplung (230) miteinander in Kontakt stehen.

4. Der Kopplungsmechanismus nach Anspruch 1,
wobei das Kopplungselement (240) ferner einen Träger (242) umfasst, der in einer Form entsprechend dem Außenumfang des zweiten stabförmigen Elements (100) ausgebildet ist und gegen das zweite stabförmige Element (100) gedrückt wird und dadurch das zweite stabförmige Element (100) abstützt.

5. Der Kopplungsmechanismus nach Anspruch 1,
wobei das erste stabförmige Element (200) und das zweite stabförmige Element (100) Rohre sind.

6. Der Kopplungsmechanismus nach Anspruch 5,
wobei das erste stabförmige Element (200) und das zweite stabförmige Element (100) Polyvinylchloridrohre sind.

## Revendications

1. Mécanisme d'accouplement comprenant :
un premier organe en forme de tige (200) ;
un deuxième organe en forme de tige (100) ; et
un organe d'accouplement (240), dans lequel
le premier organe en forme de tige (200) comporte :
une première portion tige (210) ; et
un premier accouplement (230) tubulaire qui est attaché à une extrémité de la première portion tige (210), et
le deuxième organe en forme de tige (100) comporte :
une deuxième portion tige (110) ; et
un deuxième accouplement (120) tubulaire qui est attaché à une extrémité de la deuxième portion tige (110),
le deuxième organe en forme de tige (100) ayant une circonférence externe dans laquelle est formé un trou (118, 122),
l'organe d'accouplement (240) comporte :
un organe en plaque (241) déformable dont une extrémité est fixée à une circonférence externe du premier accouplement (230), et dont une autre extrémité est fixée à un élément de support (242) ;
une portion de préhension (244) prévue sur l'élément de support (242), la portion de préhension (244) ayant une forme le long d'une circonférence externe du deuxième accouplement (120) et supportant le deuxième accouplement (120) ; et
une saillie (245) qui est une portion vis d'un boulon, la saillie (245) pénétrant un trou (2411) qui est formé dans l'organe en plaque (241) et un trou (247) qui est formé dans l'élément de support (242) pour faire saillie dans une direction radiale de la portion de préhension (244), et
la saillie (245) de l'organe d'accouplement (240) est insérée dans un trou (122) du deuxième accouplement (120) dans un état où une section transversale (232) d'un tube du premier accouplement (230) et une section transversale (121) d'un tube du deuxième accouplement (120) sont en contact l'une avec l'autre, et une extrémité du deuxième organe en forme de tige (100) est insérée dans le premier accouplement (230) tubulaire.

2. Mécanisme d'accouplement selon la revendication 1, dans lequel,
la première portion tige (210) est allongée et tubulaire,
le premier accouplement (230) est un organe tubulaire, le premier accouplement (230) est prévu dans une position où la première portion tige (210) est insérée dans le tube du premier accouplement (230) dans la direction longitudinale sur une première distance dans la direction longitudinale de la première portion tige (210) à partir de l'extrémité de la première portion tige (210) sur le côté où est prévu le premier accouplement (230), et
la deuxième portion tige **(110)** est allongée et tubulaire,
le deuxième accouplement (120) est un organe tubulaire, dans lequel le trou (122) est formé sur une circonférence externe du deuxième accouplement (120), le deuxième accouplement (120) étant prévu dans une position séparée de l'extrémité de la deuxième portion tige (110) sur le côté où est prévu le deuxième accouplement (120) dans la direction longitudinale de la deuxième portion tige **(110)** sur une deuxième distance.

3. Mécanisme d'accouplement selon la revendication 2, dans lequel, dans l'organe d'accouplement (240), avec une section transversale (121) d'un tube du deuxième accouplement (120) et section transversale (232) d'un tube du premier accouplement (230) qui entrent en contact l'une avec l'autre, la saillie (245) est insérée dans le trou (118, 122) du deuxième organe en forme de tige (100).

4. Mécanisme d'accouplement selon la revendication 1, dans lequel l'organe d'accouplement (240) comporte en outre un élément de support (242) qui est formé en une forme le long de la circonférence externe du deuxième organe en forme de tige (100) et qui est pressé dans le deuxième organe en forme de tige (100) et supporte ainsi le deuxième organe en forme de tige (100).

5. Mécanisme d'accouplement selon la revendication 1, dans lequel le premier organe en forme de tige (200) et le deuxième organe en forme de tige (100) sont des tubes.

6. Mécanisme d'accouplement selon la revendication 5, dans lequel le premier organe en forme de tige (200) et le deuxième organe en forme de tige (100) sont des tubes en polychlorure de vinyle.
